# EUROPÄISCHE PATENTSCHRIFT

(11) **EP 1 897 814 B1**
(45) Veröffentlichungstag und Bekanntmachung des Hinweises auf die Patenterteilung: **03.09.2008**
(21) Anmeldenummer: 06018445.4
(22) Anmeldetag: 04.09.2006
(51) Int. Cl.: B65D 25/06, C02F 3/12

(54) **Behälter**
Container
Conteneur

(43) Veröffentlichungstag der Anmeldung: 12.03.2008
(73) Patentinhaber: Graf Plastics GmbH, 79331 Teningen (DE)
(72) Erfinder: Graf, Otto P., 79331 Teningen (DE)
(74) Vertreter: Grünecker, Kinkeldey, Stockmair & Schwanhäusser Anwaltssozietät

(56) Entgegenhaltungen:
- EP-A2- 1 533 252
- US-A- 4 325 823
- US-B1- 6 227 396
- US-B1- 6 280 614

## Beschreibung

Die Erfindung betrifft einen Behälter gemäß Oberbegriff des Patentanspruchs 1.

Der aus EP 0 870 877 B1 bekannte Behälter aus zwei identischen, napfförmigen Kunststoff-Spritzgussteilen wird mit den zueinander passenden Öffnungsrandstrukturen außen durch klammerförmige Schnellverbinder gefügt. Zwischen den Öffnungsrandstrukturen ist eine Dichtung eingesetzt. Der Behälter ist ohne Trennwand beispielsweise als Regenwassertank einsetzbar. Dieser unter dem Handelsnamen "Herkules" bekannte Behälter ist gemäß Katalog K 26, Ausgabe 2006, "Kleinkläranlagen und Fäkalien-Sammelgruben" der Firma Otto Graf GmbH Kunststofferzeugnisse, D-79331 Teningen, Seiten 22, 23 auch für Sammelgruben zugelassen, wobei, falls mehrere Kammern benötigt werden, auch mehrere dieser Behälter installiert und über Rohrleitungen kommunizierend verbunden werden müssen.

Aus diesem Katalog K 26, ab Seite 4, sind Kleinkläranlagen "System Aqua-Simplex" bekannt, die auf einem durch Rotationsgießen monolithisch hergestellten, im Grundzug liegenden zylindrischen Behälter mit bombierten Endkappen basieren. In dem Behälter ist in der Längsmitte eine Trennwand einrotiert, so dass der Behälter als Ein-Behälter-Kläranlage zur Wasserbehandlung in zwei Kammern nutzbar ist. Die Trennwand kann die Kammern vollständig voneinander separieren oder über eine oben liegende Überlaufschwelle kommunizieren lassen. Es sind auch Ausführungsformen des rotationsgegossenen Behälters erläutert, bei denen die einrotierte Trennwand randseitig wasserdicht absperrt und eine zentrale Durchtrittsöffnung besitzt, z.B. im Einsatzfall als Absetzgrube oder Ausfaulgrube. Rotationsgießen ist jedoch ein teures, wenig rationelles Verfahren, erfordert große Werkzeuge und Maschinen, teures Material und lange Zykluszeiten. Die einrotierte Trennwand hat eine feste Position. Den rotationsgegossenen Behälter zu transportieren kann erhebliche Transportprobleme und hohe Transportkosten bedingen, insbesondere bei großem Fassungsvermögen. Die Handhabung des Behälters erfordert in den meisten Fällen die Verwendung eines Hebezeugs.

Bei aus US 4 325 823 A und US 6 280 614 B bekannten Behältern, die aus mindestens zwei unterschiedlich gestalteten Teilen gefügt werden, sind Trennwände installiert, die im Wesentlichen den gesamten Innenquerschnitt des Behälters ausfüllen und randseitig verankert werden. Die Herstellung und die Montage jeder mit dem vollen oder dem nahezu vollen Querschnitt des Behälters produzierten Trennwand sind aufwändig, insbesondere bei dem aus dem einen Behälterteil in den anderen Behälterteil ragenden Trennwandabschnitt.

Der Erfindung liegt die Aufgabe zugrunde, einen einfach montierbaren Kunststoffbehälter zur Wasserbehandlung anzugeben, der aus zumindest zwei getrennt herstellbaren Behälterteilen gefügt und in universeller Weise zur Wasserbehandlung in mehreren Kammern einsetzbar ist, ohne eine der Anzahl der Kammern entsprechende Anzahl von Behältern verwenden zu müssen.

Die gestellte Aufgabe wird mit den Merkmalen des Patentanspruchs 1 gelöst.

Da der Behälter aus getrennt durch Spritzgießen oder Spritzprägen hergestellten Behälterteilen gefügt wird, und vor dem Fügen bei Bedarf zumindest eine Trennwand oder mehrere Trennwände an wählbarer Position montiert wird bzw. werden, sind die Kosten des Behälters geringer als beim Rotationsformen und können Behälterteile verwendet werden, die sich auch zur Erstellung trennwandfreier Behälter eignen. Da somit dieselben, aus einem Werkzeug stammenden Behälterteile universell für verschiedene Behältertypen und Einsatzfälle (z.B. zur Regenwassernutzung, Abscheidung, Klärung, Faulung, und ähnliche Wasserbehandlungsverfahren) brauchbar sind, lassen sich höhere Stückzahlen mit geringeren Gestehungskosten erzielen. Ferner ist, falls der Behälter erst vor Ort montiert wird, das Transportproblem für die in gestapelter Form transportierbaren Behälterteile wesentlich einfacher. Das Spritzgießen oder Spritzprägen der Behälterteile, und zweckmäßig auch der Trennwand, lässt sich mit kürzeren Zykluszeiten und kostengünstigerem Material und sehr rationell durchführen, und garantiert hohe Formtreue bei guter Formstabilität. In anderen Worten, lässt sich, basierend auf in Serie produzierten Behälterteilen und Trennwänden, modular eine breite Palette unterschiedlicher Behälter zur Wasserbehandlung schaffen. Dabei wird die Trennwand aus zwei in der Fügeebene verbundenen, vorzugsweise identischen, Trennwandteilen erstellt. Für die Herstellung der Trennwandteile genügt ein einziges Werkzeug. Der Montageprozess gestaltet sich einfach, da sozusagen jeder Behälterteil mit seinem Trennwandteil vormontierbar ist, und die Trennwandteile beim oder vor dem Fügen der Behälterteile gefügt werden.

Dabei ist es wichtig, dass die Behälterteile mit mehreren, vorzugsweise identischen, Trennwand-Montierbereichen, vorzugsweise abwechselnden Rippen und Rillen, ausgebildet sind, die Trennwand-Wahlpositionen definieren. In trennwandfreien Behältern erhöhen diese Montierbereiche die Formstabilität. In Behältern mit wenigstens einer Trennwand ist eine wählbare vorgegebene und stabile Montierposition für die Trennwand vorhanden, an der sich die Trennwand nach Bedarf einsetzen lässt, derart, dass beispielsweise gleich große oder verschieden große Kammern in ein und demselben Behälter geschaffen werden.

Bei einer Ausführungsform des Behälters, der monolithisch durch Verschweißen der Öffnungsrandstrukturen aus den Behälterteilen erstellt wird, ist zweckmäßig auch jeder Trennwandteil randseitig in einen Behälterteil eingeschweißt, und wird beim Verschweißen der Öffnungsrandstrukturen auch die Teilfuge zwischen den Trennwandteilen verschweißt.

Bei einer alternativen Ausführungsform wird ein teilbarer Behälter aus den Behälterteilen erstellt, indem die Öffnungsrandstrukturen mit Dichtungen und Befestigungselementen gefügt werden, wie auch die Teilfuge der Trennwandteile, da eine unterteilte Trennwand eingesetzt wird. Die Abstützung der Trennwand erfolgt über die formschlüssig wirkenden Montierbereiche der Behälterteile.

Für einen Einsatzfall, bei welchem zwischen den durch die Trennwand separierten Kammern eine Kommunikation erforderlich ist, kann die Trennwand bzw. ein Trennwandteil wenigstens einen randseitigen und/oder innerhalb des Randes liegenden Kommunikationsausschnitt aufweisen. Dieser Ausschnitt kann vorgeformt sein, oder erst vor Ort ausgeschnitten werden.

Zweckmäßig sind die Trennwandteile durch Spritzgießen oder Spritzprägen aus Kunst stoff hergestellt. PE, PP oder andere Kunststoffmaterialien sind hier besondere geeignet. Der Kunststoff kann in unverstärkter Form verarbeitet sein, oder eine Faser- oder Mineralverstärkung enthalten.

Um ausreichende Formstabilität der Trennwand zu erzielen, die auch den Behälter aussteift, weist die Trennwand zweckmäßig eine aussteifende Waffelstruktur auf.

Zum einfacheren Montieren des jeweiligen Trennwandteils sind randseitig und/oder fugenseitig Schweiß- bzw. Dichtflansche angeformt.

Bei einer bevorzugten Ausführungsform ist der Behälter aus zwei identischen Behälterteilen mit bombierten Endkappen annähernd zylindrisch ausgebildet und in einer die Zylinderachse enthaltenden, Fügeebene gefügt. Die Fügeebene liegt zweckmäßig in der Gebrauchslage in etwa horizontal. Die Rippen und Rillen zum Positionieren der fallweise montierten Trennwand sind in den Behälterteilen senkrecht zur Fügeebene orientiert und gehen in der Fügeebene ineinander über. In jedem Behälterteil ist ein runder Domansatz mit einer ebenen Abdeckscheibe eingeformt. Die Abdeckscheibe lässt sich dort leicht entfernen, wo ein Behälterdom installiert wird. Entlang der Abdeckscheibe sind zweckmäßig die Rippen und Rillen unterbrochen, weil die Abdeckscheibe eine Flachstelle des Zylinders bildet. Um mit einem Typ eines Trennwandteils auszukommen und diesen an jeder Wahlposition montieren zu können, ist es zweckmäßig, wenn die Flachstelle bei einer Ausführungsform zwischen Rippen in mehrere einander benachbarte Rillen hinein verlängert ist und dadurch lauter gleich lange ebene Trennwand-Montierflächen definiert. Die Trennwand ist hierfür annähernd eine Kreisscheibe mit zwei Abflachungen korrespondierend mit den ebenen Montierflächen der Behälterteile und passt somit exakt in den Innenquerschnitt des Behälters.

Bei einer anderen, zweckmäßigen Ausführungsform ist der Behälter aus zwei identischen, napfartigen Behälterteilen erstellt, die in einem einzigen Werkzeug produziert werden. Die Fügeebene liegt in Gebrauchslage zweckmäßig horizontal. Die Rippen und Rillen in der Fügeebene gehen ineinander über und queren die Fügeebene, so dass an mindestens einer wählbaren Position von mehreren je eine Trennwand montiert werden kann. Auch dieser Behälter lässt sich unter Verwenden der gleichen Behälterteile trennwandfrei verwenden.

Schließlich ist es zweckmäßig, wenn entlang des Grundes zumindest einiger Rillen ein Profil, vorzugsweise ein U-Profil, eingeformt ist, in dem wahlweise eine Dichtung positionierbar oder an dem die Trennwand verschweißbar ist. Dieses Profil erstreckt sich durchgehend auch entlang zumindest einiger Montierflächen, d.h. quer über die Abdeckscheibe des Domansatzes.

Anhand der Zeichnungen werden Ausführungsformen des Erfindungsgegenstandes erläutert. Es zeigen:
- Fig. 1: eine schematische Seitenansicht eines gefügten Behälters,
- Fig. 2: eine Perspektivansicht eines Behälterteils des Behälters von Fig. 1,
- Fig. 3: eine perspektivische Schnittdarstellung des Fügebereiches bei einer monolithischen Ausführung des Behälters von Fig. 1,
- Fig. 4: eine perspektivische Darstellung eines mit Befestigungselementen hergestellten Fügebereiches des teilbar erstellten Behälters von Fig. 1,
- Fig. 5: eine Frontansicht einer Trennwand, wie sie alleine oder mehrfach in dem Behälter von Fig. 1 montierbar ist,
- Fig. 6: einen Schnitt in Fig. 5 in der Schnittebene VI- VI,
- Fig. 7: einen Detailschnitt des Montierbereiches der Trennwand im Behälter,
- Fig. 8: einen Detailschnitt in der Ebene VIII-VIII in Fig. 1, und
- Fig. 9: eine Perspektivansicht einer anderen Ausführungsform eines Behälters.

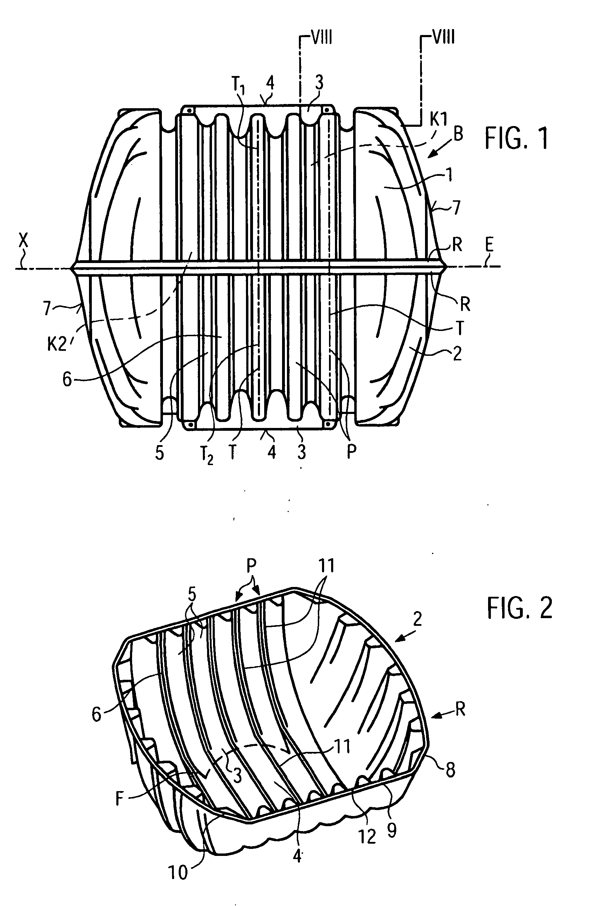

Ein Behälter B zur Wasserbehandlung gemäß Fig. 1 ist aus, bei der gezeigten Ausführungsform, zwei identischen Behälterteilen 1, 2 gefügt. Die Behälterteile 1, 2 sind zweckmäßig Spritzguss- oder Spritzpräge-Formteile, zweckmäßig aus Polypropylen oder Polyethylen in verstärkter oder unverstärkter Einstellung.

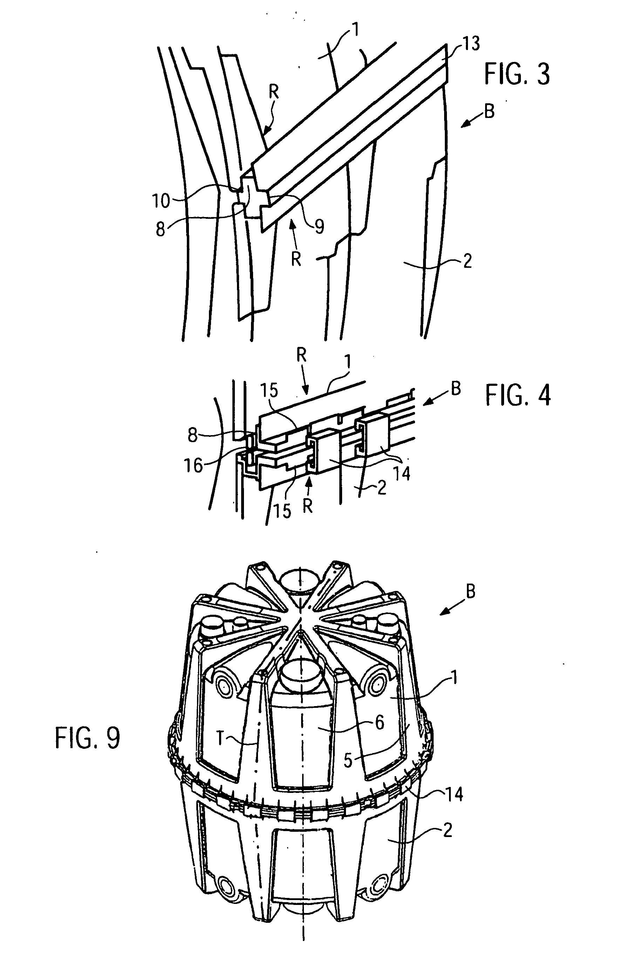

Die Behälterteile 1, 2 weisen an ihren offenen Seiten identische Öffnungsrandstrukturen R auf, die in einer Fügeebene E gefügt sind. Dabei kann der Behälter B nach zwei verschiedenen Fügearten gefügt sein, nämlich entweder durch Verschweißen der Öffnungsrandstrukturen R (Fig. 3) oder durch entlang der Öffnungsrandstrukturen gesetzte Befestigungselemente (Klammerungsfügen) unter Verwendung einer Dichtung (Fig. 4).

Die Öffnungsrandstrukturen R sind in einer Fügeebene E gefügt, die in der Gebrauchslage des Behälters beispielsweise in etwa horizontal liegt. Der Behälter B hat in dieser Ausführungsform eine annähernd zylindrische Form mit bombierten Endkappen 7 und unten und oben angeformten, runden Domansätzen 3, die, zumindest zunächst, durch runde und ebene Abdeckscheiben 4 verschlossen sind. In der gezeigten Ausführungsform liegen die Abdeckscheiben 4 parallel zur Fügeebene E, die auch die Zylinderachse x enthält. Im weitgehend zylindrischen Teil des Behälters B sind quer zur Fügeebene, vorzugsweise senkrecht zu dieser, eingeformte Rillen und Rippen 5, 6 abwechselnd vorgesehen, die innerhalb des zylindrischen Teils mehrere Trennwand-Wahlpositionen P definieren. Genauer gesagt definieren die zum Inneren des Behälters B offenen Rillen 6 die Wahlpositionen P. Im Behälter B ist an einer ausgewählten Wahlposition eine Trennwand T montiert, die aus zwei Trennwandteilen T1, T2 erstellt ist. Zweckmäßig sind auch die Trennwandteile T1, T2 identische Spritzguss- oder Spritzpräge-Formteile aus Kunststoff.

In der gezeigten Ausführungsform unterteilt die einzige Trennwand T den Behälter B in zwei gleich große Kammern K1, K2. Es können jedoch auch andere Unterteilungen (nicht gezeigt) gewählt werden, z.B. 1 : 3, 1 : 4, oder dgl..

Fig. 2 zeigt den unteren Behälterteil 2 des Behälters B von Fig. 1 (der obere Behälterteil 1 ist identisch ausgebildet). Alternativ könnten auch unterschiedlich gestaltete Behälterteile gefügt sein, vorausgesetzt, ihre Öffnungsrandstrukturen R passen zueinander.

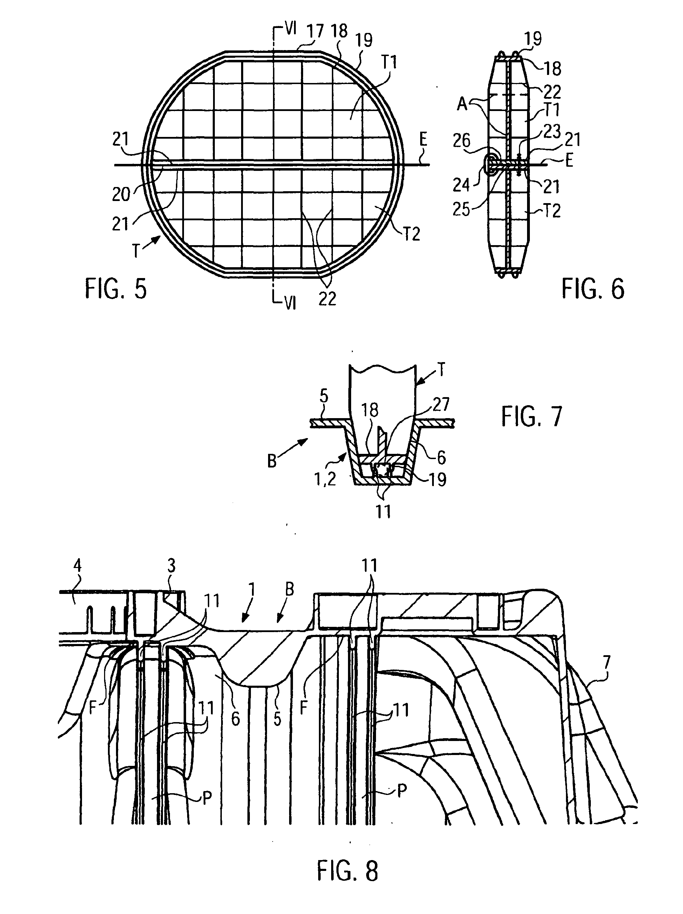

In Fig. 2 sind die Rippen 5 annähernd mit dreieckigem oder trapezförmigem Querschnitt ausgebildet, so dass dazwischen annähernd dreieckige, trapezförmige oder gerundete Rillen 6 vorliegen, die mehrere Wahlpositionen P zum Montieren der zumindest einen Trennwand T (oder mehrerer Trennwände) definieren. Im Bereich der runden und ebenen Abdeckscheibe 4 sind die Rippen 5 unterbrochen. Ferner ist die ebene Abdeckscheibe 4 in die Rillen 6 hinein verlängert, so dass in benachbarten Rillen in diesen Bereichen lauter gleich lange und ebene Montierflächen F gebildet sind (s. auch Fig. 8). Am Grund jeder Rille 6 verläuft von der Fügeebene E über die Abdeckscheibe 4 und die Montierflächen F hinweg ein eingeformtes Profil 11 (s. auch Fig. 8), zweckmäßig eine Art U-Profil, das zum Positionieren einer Dichtung zum Abdichten des Randes der Trennwand T oder zum Verschweißen des Randes der Trennwand T, T1, T2 mit dem Behälterteil 2 dienen kann. Dieses Profil 11 läuft in der Fügeebene bei 12 aus, und bildet dort, vorzugsweise, Erweiterungen einer inneren Passfläche 10 der Öffnungsrandstruktur R. Die innere Passfläche 10 ist durch einen kontinuierlichen Dichtungskanal 8 von einer äußeren Passfläche 9 getrennt. Im Detail nicht hervorgehoben ist ein die äußere Passfläche 9 verlängernder Außenflansch, der (Fig. 4) zum Fügen mittels Befestigungselementen nutzbar ist.

Fig. 3 verdeutlicht den aus den Behälterteilen 1, 2 durch Schweißen monolithisch gefügten Behälter B. Hierbei sind die inneren und äußeren Passflächen 10, 9 miteinander verschweißt. In den Dichtungskanälen 8 ist nicht notwendigerweise eine Dichtung enthalten, da die Schweißnähte ohnedies wasserdicht sind. Bei dieser geschweißten Version des Behälters B sind die in Fig. 3 nicht gezeigten Trennwandteile T1, T2 jeweils in die Behälterteile 1, 2 eingeschweißt, und in einer Teilfuge auch miteinander verschweißt. Die Behälterteile könnten in der Teilfuge auch nur aneinander abgedichtet sein.

An sich sind an der Außenseite der äußeren Passflächen 9 Flansche mit Widerlagern 15 in den Behälterteilen 1, 2 geformt, die zum Klammerungsfügen gemäß Fig. 4 mittels C-förmiger Schnellverbinder 14 dienen. In Fig. 3 sind diese Widerlager 15 mit einem Teil des Außenflansches entfernt, zusammen mit dem beim Schweißen nach außen austretenden Schweißwulst, um eine gefällige und ebene Fläche 13 zu erzielen.

In Fig. 4 ist in die Dichtungskanäle 8 eine Dichtung 16 eingesetzt, die durch den Fügedruck komprimiert wird und die Wasserdichtheit erzeugt. Die Passflächen 10, 9 können dabei lose aneinanderliegen oder sogar im Abstand voneinander stehen. Die Öffnungsrandstrukturen R sind herstellungstechnisch für beide Versionen des Behälters B identisch. Bei der klammerungsgefügten Version des Behälters B in Fig. 4 ist die Trennwand (in Fig. 4 nicht gezeigt) nicht in die Behälterteile 1, 2 eingeschweißt, sondern auf andere Weise montiert, und zwar unter Verwendung einer randseitigen Dichtung und gegebenenfalls auch einer Dichtung in der Trennfuge zwischen den Trennwandteilen T1, T2, wie dies anhand Fig. 5 und Fig. 6 erläutert wird.

Fig. 5 zeigt die Trennwand T, die an einer oder an mehreren der Wahlpositionen P (s. auch Fig. 8) im Behälter B montierbar ist. Die Trennwand T ist annähernd eine Kreisscheibe mit oberen und unteren Abflachungen 17 korrespondierend mit den Abdeckscheiben 4 der Domansätze 3. Die Trennwand T weist z.B. eine aussteifende Waffelstruktur 22 und einen umlaufenden Montier- oder Dichtflansch 18, z.B. mit einem außen angeformten U-Profil 19 auf. Die Trennwand T , ist zweckmäßig in zwei identische Trennwandteile T1, T2 unterteilt, die in einer Trennfuge 20 mit Flanschen 21 verbindbar sind. Gemäß Fig. 6 können die Flansche 21 durch Befestigungselemente, z.B. Schrauben 23, unter Zwischenlage wenigstens einer Dichtung 25 gegeneinander gespannt sein, oder mit ähnlichen Schnellverbindern in C-Form wie die außen verwendeten Schnellverbinder 14 in Fig. 4. Es handelt sich beispielsweise um C-förmige Metall- oder Kunststoffklammern 24, die über die Ränder der Flansche 21 greifen und sich an dort angeformten Widerlagern verhaken, wobei die Widerlager zwecks Erzielen einer Fügespannung keilförmig ausgebildet sein können, wie auch die Widerlager 15.

Bei der geschweißten Version des Behälters werden zweckmäßig die Trennwandteile T1, T2 an ihren Flanschen 21 miteinander wasserdicht verschweißt (Schweißung 26 in Fig. 6). Das ggfs. außen angeformte Profil 19 der Trennwandteile T1, T2 kann entweder zum Positionieren einer Dichtung oder zum Verschweißen benutzt werden. Gestrichelt ist ein randseitiger, obenliegender Ausschnitt A der Trennwand T angedeutet, oder ein innerhalb des Randes liegender Ausschnitt A. Die beiden Trennwandteile T1, T2 sind zweckmäßig in der Fügeebene E gefügt, so dass sie sich beim Verschweißen der inneren und äußeren Passflächen 9, 10 (Fig. 3) auf einer ebenen Schweißfläche oder in derselben Ebene wie diese verschweißen lassen.

In Fig. 7 ist die Trennwand T mit dem Flansch 18 in eine Rille 6 eingesetzt, derart, dass die Profile 11, 19 zusammenwirken und entweder eine Dichtung 27 positionieren und komprimieren, oder ohne Dichtung im Bereich 27 miteinander verschweißt sind.

Es könnte die Trennwand T auch eingeklebt oder mit einem extrudierten Klebe- oder Dichtwulst abgedichtet werden. Zum Verschweißen könnte entlang des Randes, und auch in der Teilfuge, ein Drahtgebilde in Kunststoff eingebettet sein, das als Widerstandselement bei Strombeaufschlagung die zum Erweichen und Verschweißen des Kunststoffes notwendige Temperatur erzeugt. Bei der mit den Schnellverbindern (Fig. 4) gefügten Version des Behälters B positioniert der Fügedruck der Schnellverbinder 14 auch die Trennwand T bzw. die Trennwandteile T1, T2 im Behälter.

Die Behälterteile 1, 2 können, falls gewünscht, auch zum Erstellen eines trennwandfreien Behälters B verwendet, und hierfür entweder gemäß Fig. 3 oder Fig. 4 gefügt werden. Der trennwandfreie Behälter B kann beispielsweise als Regenwassertank zur Regenwassernutzung verwendet werden, während der Behälter B mit einer oder mehreren Trennwänden T für andere Wasserbehandlungsverfahren nutzbar ist, beispielsweise als Kleinkläranlage, Fäkalien-Sammelgrube, Absetzgrube, Ausfaulgrube und dgl.. Die erforderlichen Anschlüsse können durch Ausschneiden der Behälterteilwände hergestellt werden. Zusatzeinrichtungen können über den Domansatz montiert werden, in den, z. B. in Gebrauchslage oben, ein Behälterdom eingesetzt wird.

Fig. 9 zeigt eine andere Ausführungsform des Behälters B, der aus den, vorzugsweise identischen, hier napfartigen Behälterteilen 1, 2 gefügt ist, und zwar unter Verwendung von Schnellverbindern 14 und einer nicht gezeigten Dichtung. Der Behälter B kann trennwandfrei verwendet werden, enthält vorzugsweise jedoch eine Trennwand T, die in den durch die Rillen 5 definierten Montierpositionen wahlweise montierbar ist, und zwar wie anhand der vorhergehenden Figuren erläutert. Die napfartigen Behälterteile 1, 2 könnten ohne Dichtung auch verschweißt werden.

## Patentansprüche

1. Behälter (B) zur Wasserbehandlung, aus mindestens zwei offenen Kunststoff-Spritzguss- oder Spritzpräge-Behälterteilen (1, 2), die zueinander passende, in einer Fügeebene (E) gefügte Öffnungsrandstrukturen (R) aufweisen wobei im Behälter (B) quer zur Fügeebene (E) wenigstens eine als separater Losteil hergestellte Trennwand (T) mit ihrem Rand zumindest bereichsweise wasserdicht an den Behälterteilwänden abgestützt ist, **dadurch gekennzeichnet, dass** die Trennwand (T) aus zwei in der Fügeebene (E) verbundenen, vorzugsweise identischen, Trennwandteilen (T1, T2) erstellt ist.

2. Behälter nach Anspruch 1, **dadurch gekennzeichnet, dass** die Behälterteile (1, 2) mit mehreren, vorzugsweise identischen, Trennwand-Montierbereichen, vorzugsweise abwechselnden Rippen und Rillen (6, 5) ausgebildet sind, die mehrere gleiche Trennwand-Wahlpositionen (P) definieren.

3. Behälter nach Anspruch 1, **dadurch gekennzeichnet, dass** die Trennwand-Montierbereiche in den Behälterteilwänden in einer Richtung entlang der Fügeebene (E) quer, vorzugsweise senkrecht, zur Fügeebene (E) liegen.

4. Behälter nach Anspruch 1, **dadurch gekennzeichnet, dass** jeder Trennwandteil (T1, T2) randseitig in einen Behälterteil (1, 2) eingeschweißt ist, und dass die Öffnungsrandstrukturen (R) der Behälterteile (1, 2) und die Teilfuge (20) zwischen den Trennwandteilen (T1, T2) jeweils durch Schweißen (26) gefügt sind.

5. Behälter nach Anspruch 1, **dadurch gekennzeichnet, dass** jeder Trennwandteil (T1, T2) mit wenigstens einer randseitigen Dichtung in seinen Behälterteil (1, 2) eingesetzt ist, und dass die Öffnungsrandstrukturen (R) der Behälterteile (1, 2) und die Teilfuge (20) zwischen den Trennwandteilen (T1, T2) mit Dichtungen (16, 25) und Befestigungselementen (24, 23; 14) gefügt sind.

6. Behälter nach wenigstens einem der vorhergehenden Ansprüche, **dadurch gekennzeichnet, dass** die Trennwand (T) bzw. ein Trennwandteil (T1, T2) wenigstens einen randseitigen und/oder innerhalb des Randes liegenden Kommunikationsausschnitt (A) aufweist.

7. Behälter nach wenigstens einem der vorhergehenden Ansprüche, **dadurch gekennzeichnet, dass** die Trennwand (T) bzw. die Trennwandteile (T1, T2) durch Spritzgießen oder Spritzprägen aus Kunststoff hergestellt ist (sind), vorzugsweise aus PE, PP, in unverstärkter oder faser- oder mineralverstärkter Einstellung.

8. Behälter nach wenigstens einem der vorhergehenden Ansprüche, **dadurch gekennzeichnet, dass** die Trennwand (T) eine aussteifende Waffelstruktur (22) aufweist.

9. Behälter nach wenigstens einem der vorhergehenden Ansprüche, **dadurch gekennzeichnet, dass** im Randbereich der Trennwand (T) bzw. des Trennwandteils (T1, T2) und in diesem entlang auch der Teilfuge (20) ein Schweiß- bzw. Dichtflansch (18, 19) vorgesehen ist.

10. Behälter nach wenigstens einem der vorhergehenden Ansprüche, **dadurch gekennzeichnet, dass** der Behälter (B) aus zwei identischen Behälterteilen (1, 2) mit bombierten Endkappen (7) annähernd zylindrisch ausgebildet und in einer die Zylinderachse (x) enthaltenden, vorzugsweise in der Gebrauchslage in etwa horizontalen, Fügeebene (E) gefügt ist, dass die Rippen und Rillen (5, 6) in den Behälterteilen (1, 2) senkrecht zur Fügeebene (E) orientiert sind und in der Fügeebene ineinander übergehen, und dass in jedem Behälterteil (1, 2) in etwa radial zur Zylinderachse (x) ein runder Domansatz (3) mit einer ebenen Abdeckscheibe (4) eingeformt ist, die eine Flachstelle des Zylinders bildet und der entlang die Rippen und Rillen (5, 6) unterbrochen sind

11. Behälter nach Anspruch 10, **dadurch gekennzeichnet, dass** die Flachstelle zwischen Rippen (6) in mehrere einander benachbarte Rillen (5) hinein verlängert ist und gleich lange, ebene Trennwand-Montierflächen (F) definiert, und dass jeweils die Trennwand (T) annähernd eine Kreisscheibe mit zwei Abflachungen (17) korrespondierend mit den ebenen Montierflächen (F) ist.

12. Behälter nach Anspruch 11, **dadurch gekennzeichnet, dass** entlang des Grundes zumindest einiger Rillen (5) und entlang zumindest einiger Montierflächen (F) jeweils ein Profil (11), vorzugsweise ein U-Profil, eingeformt ist, in dem wahlweise eine Dichtung (27) positionierbar oder an dem die Trennwand (T) verschweißbar ist.

13. Behälter nach wenigstens einem der Ansprüche 1 bis 9, **dadurch gekennzeichnet, dass** der Behälter (B) aus zwei identischen, napfartigen Behälterteilen (1, 2) mit, vorzugsweise in Gebrauchslage horizontaler Fügeebene (E) erstellt ist, dass die Rippen und Rillen (5, 6) in der Fügeebene (E) quer zur Fügeebene ineinander übergehen, und dass in zumindest einer Rille (5) eine Trennwand (T) montiert ist.

## Claims

1. Tank (B) for water treatment, consisting of at least two open tank parts (1, 2) made from plastic material by injection moulding or injection moulding and embossing, the tank parts having opening edge structures (R) which fit on each other and which are joined to each other in a joining plane (E), and of at least one separately produced separation wall (T) which extends in the tank (B) crosswise to the joining plane (E), the separation wall (T) being supported at the edge at walls of the tank parts such that at least some peripheral regions are watertight, **characterised in that** the separation wall (T) is made from two, preferably identical, separation wall parts (T1, T2), which are joined to each other in the joining plane (E).

2. Tank according claim 1, **characterised in that** the tank parts (1, 2) are formed with several, preferably identical, separation wall mounting regions, preferably, alternating ribs and grooves (5, 6), defining equally designed separation wall mounting positions (P).

3. Tank according to claim 1, **characterised in that** separation wall mounting regions are situated in the walls of the tank parts in a direction along the joining plane (E) crosswise to the joining plane (E), preferably perpendicular to the joining plane (E).

4. Tank according to claim 1, **characterised in that** each separation wall part (T1, T2) is welded at the edge into one tank part (1, 2) and that the opening edge structures (R) of the tank parts (1, 2) and the separation gap (20) between the separation wall parts (T1, T2) respectively are joined by welding (26).

5. Tank according to claim 1, **characterised in that** each separation wall part (T1, T2) is inserted with at least one sealing at the edge into a tank part (1, 2), and that opening edge structures (R) of the tank parts (1, 2) and the separation gap (20) between the separation wall parts (T1, T2) are joined with sealing (16, 25) and fixation elements (24, 23, 14).

6. Tank according to at least one of the preceding claims, **characterised in that** the separation wall (T) or one separation wall part (T1, T2) is provided with at least one communication cut-out (A), which is situated at the edge and/or inside the edge, respectively.

7. Tank according to at least one of the preceding claims, **characterised in that** the separation wall (T) or the separation wall parts (T1, T2) are produced from plastic material by injection moulding or injection moulding and embossing, preferably from PE, PP, either without a reinforcement or with a fibre or mineral reinforcement.

8. Tank according to at least one of the preceding claims, **characterised in that** the separation wall (T) is provided with a stiffening waffle structure (22).

9. Tank according to at least one of the preceding claims, **characterised in that** a welding flange or sealing flange (18, 19) is provided along the edge of the separation wall (T) or the separation wall part (T1, T2) and of the separation wall parts (T1, T2), also along the joining gap (20).

10. Tank according to at least one of the preceding claims, **characterised in that** the tank (B) is formed substantially cylindrical from two identical tank parts (1, 2) having outwardly rounded end caps (7) by joining the tank parts (1, 2) in a joining plane (E) containing the cylinder axis (X), the joining plane (E), preferably, being substantially horizontal in the usage position of the tank (B), that the ribs and grooves (5, 6) are oriented in the tank parts (1, 2) perpendicular to the joining plane (E) and continue in one another over the joining plane (E), and that a round dome boss (3) having a flat covering disc (4) is formed into each tank part (1, 2) substantially radially to the cylinder axis (X), which covering disc (4) forms a flat portion of the cylinder, and such that the ribs and grooves are interrupted along the covering disc (4).

11. Tank according to claim 10, **characterised in that** the flat portion is prolonged between ribs (6) into several adjacent grooves (5) for defining separation wall mounting surfaces (F) which are flat and have equal length, and that the respective separation wall (T) is substantially a circular disc having two flat regions (17) in the circumference corresponding with the flat mounting surfaces (F).

12. Tank according to claim 11, **characterised in that** along the bottom of at least several grooves (5) and along at least several mounting surfaces (F) a respective profile (11), preferably a U-profile, is formed for selectively positioning either a sealing (27) or for welding the separation wall (T).

13. Tank according to at least one of claims 1 to 9, **characterised in that** the tank (B) is made from two identical cup-shaped tank parts (1, 2), which are joined in a joining plane (E) which, preferably, is situated substantially horizontally in the usage position of the tank, that the ribs and grooves (5, 6) are continued into each other in the joining plane (E) crosswise to the joining plane, and that in at least one of the grooves (5) a separation wall (T) is mounted.

## Revendications

1. Conteneur (B) pour le traitement de l'eau composé d'au moins deux parties de conteneur moulées par injection de matière plastique ou estampées par injection, ouvertes (1, 2) qui présentent des structures de bord d'ouverture (R) assemblées dans un plan d'assemblage (E), adaptées les unes aux autres, dans lequel dans le conteneur (B) transversalement au plan d'assemblage (E), au moins une paroi de séparation fabriquée comme une pièce démontable séparée est en appui avec son bord au moins par endroits de manière étanche à l'eau sur les parois de partie de conteneur, **caractérisé en ce que** la paroi de séparation (T) est réalisée à partir de deux parties de paroi de séparation (T1, T2) reliées dans le plan d'assemblage (E), de préférence identiques.

2. Conteneur selon la revendication 1, **caractérisé en ce que** les parties de conteneur (1, 2) sont réalisées avec plusieurs zones de montage de paroi de séparation, de préférence identiques, de préférence des nervures et des rainures (6, 5) en alternance, qui définissent plusieurs positions de choix de paroi de séparation (P) identiques.

3. Conteneur selon la revendication 1, **caractérisé en ce que** les zones de montage de paroi de séparation se trouvent dans les parois de parties de conteneur dans un sens le long du plan d'assemblage (E) transversalement, de préférence perpendiculairement au plan d'assemblage (E).

4. Conteneur selon la revendication 1, **caractérisé en ce que** chaque partie de paroi de séparation (T1, T2) est soudée côté bord dans une partie de conteneur (1, 2), et **en ce que** les structures de bord d'ouverture (R) des parties de conteneur (1, 2) et le joint (20) entre les parties de paroi de séparation (T1, T2) sont assemblés respectivement par soudage (26).

5. Conteneur selon la revendication 1, **caractérisé en ce que** chaque partie de paroi de séparation (T1, T2) est insérée avec au moins une garniture côté bord dans sa partie de conteneur (1, 2), et **en ce que** les structures de bord d'ouverture (R) des parties de conteneur (1, 2) et le joint (20) entre les parties de paroi de séparation (T1, T2) sont assemblés par des garnitures (16, 25) et des éléments de fixation (24, 23 ; 14).

6. Conteneur selon au moins l'une quelconque des revendications précédentes, **caractérisé en ce que** la paroi de séparation (T) ou une partie de paroi de séparation (T1, T2) présente au moins un détail de communication (A) côté bord et/ou se trouvant à l'intérieur du bord.

7. Conteneur selon au moins l'une quelconque des revendications précédentes, **caractérisé en ce que** la paroi de séparation (T) ou les parties de paroi de séparation (T1, T2) est/sont fabriquée(s) par moulage par injection ou par estampage par injection de matière plastique, de préférence de PE, PP dans un réglage non renforcé ou renforcé par des fibres ou des minéraux.

8. Conteneur selon au moins l'une quelconque des revendications précédentes, **caractérisé en ce que** la paroi de séparation (T) présente une structure à raidissage intégré (22) de renforcement.

9. Conteneur selon au moins l'une quelconque des revendications précédentes, **caractérisé en ce qu'**une bride à souder ou d'étanchéité (18, 19) est prévue dans la zone de bord de la paroi de séparation (T) ou de la partie de paroi de séparation (T1, T2) et dans celle-ci le long également du joint (20).

10. Conteneur selon au moins l'une quelconque des revendications précédentes, **caractérisé en ce que** le conteneur (B) est réalisé de manière approximativement cylindrique à partir de deux parties de conteneur (1, 2) identiques avec des chapeaux terminaux (7) bombés, et est assemblé dans un plan d'assemblage (E) de préférence à peu près horizontal en position d'utilisation, contenant l'axe de cylindre (x), **en ce que** les nervures et les rainures (5, 6) sont orientées dans les parties de conteneur perpendiculairement au plan d'assemblage (E) et se fondent l'une dans l'autre dans le plan d'assemblage, et **en ce que** dans chaque partie de conteneur (1, 2) à peu près radialement par rapport à l'axe de cylindre (x) est formée une saillie de dôme (3) ronde avec une bague de recouvrement (4) plane qui forme un méplat du cylindre et le long duquel les nervures et les rainures (5, 6) sont interrompues.

11. Conteneur selon la revendication 10, **caractérisé en ce que** le méplat entre des nervures (6) est prolongé dans plusieurs rainures (5) contiguës et définit des surfaces de montage de paroi de séparation (F) planes, de longueur identique, et **en ce que** respectivement la paroi de séparation (T) est approximativement un disque circulaire avec deux aplatissements (17) correspondant aux surfaces de montage (F) planes.

12. Conteneur selon la revendication 11, **caractérisé en ce que** le long du fond d'au moins quelques nervures (5) et le long d'au moins quelques surfaces de montage (F) est formé respectivement un profilé (11), de préférence un profilé en U, dans lequel une garniture (27) peut être positionnée au choix ou sur lequel peut être soudée la paroi de séparation (T).

13. Conteneur selon au moins l'une quelconque des revendications 1 à 9, **caractérisé en ce que** le conteneur (B) est réalisé à partir de deux parties de conteneur (1, 2) identiques, du genre coupelle avec un plan d'assemblage (E) de préférence horizontal en position d'utilisation, **en ce que** les nervures et les rainures (5, 6) se fondent l'une dans l'autre dans le plan d'assemblage (E) transversalement au plan d'assemblage, et **en ce que** dans au moins une rainure (5) est montée une paroi de séparation (T).
